# EUROPEAN PATENT SPECIFICATION

(11) **EP 3 350 125 B1**
(45) Date of publication and mention of the grant of the patent: **29.04.2020**
(21) Application number: 16784950.4
(22) Date of filing: 16.09.2016
(51) Int. Cl.: C02F 1/00, B01D 35/30

(54) **FILTER HEAD**
FILTERKOPF
TÊTE DE FILTRE

(30) Priority: 18.09.2015 GB 201516591
(43) Date of publication of application: 25.07.2018
(73) Proprietor: Greg Rowe Limited, Norfolk NR10 4FE (GB)
(72) Inventor: ROWE, Gregory N, Norwich Norfolk NR10 4FE (GB)
(74) Representative: Appleyard Lees IP LLP
(86) International application number: PCT/GB2016/052893
(87) International publication number: WO 2017/046600

(56) References cited:
- US-A1- 2003 168 394
- US-B1- 6 224 754

## Description

### Technical Field

The present invention relates to a filter head for fitting to a water filter.

### Background

Water supplies to a building, such as a domestic dwelling, office or other business building, etc., are often filtered on site. This is particularly the case for drinking water, which may be passed through a filter on site before delivery to a tap or the like for consumption by a consumer or to an appliance that uses drinking water. A filter head is conventionally fitted to the filter to pass water from the incoming mains water supply into the filter, and to receive filtered water from the filter and pass the filtered water to the water tap or appliance. In the case that there are two or more points that consume filtered water (such as a water tap and an appliance, or two or more appliances), it is conventional to fit a T-shape pipe fitting to the filtered water outlet of the filter head in order to distribute the filtered water to the two (or more) consumption points. This increases costs and makes installation and maintenance complex.

US2003/0168394 describes a filter head assembly configured for connection to a water line and including at least two filter heads connected to each other. There is a pivotable head housing having an inlet port and an outlet port.

### Summary

According to the present invention which is defined in claim 1, there is provided a filter head for fitting to a water filter, the filter head comprising:
a filter connector for enabling the filter head to be connected to a filter;
a water inlet to allow water to enter the filter head from an external water supply;
a water inlet passage for passing water entering the water inlet to a filter connected in use to the filter connector; and
at least a first water outlet, to allow water that has passed through a filter connected in use to the filter connector to exit the filter head through the first water outlet, and a second water outlet, to allow water that has passed through a filter connected in use to the filter connector to exit the filter head through the second water outlet.

As the filter head itself provides for passing filtered water to (at least) first and second outlets, the need for some additional pipe fitting, such as a T-shape pipe fitting on the filtered water outlet of the filter head as in the prior art, is avoided. This helps to keep down costs and simplifies installation and maintenance of the filter head and of the filter to which it is connected in use. This is also more convenient for the user or installer as it is not necessary to buy and carry additional pipe fittings to allow filtered water to be distributed to two or more consumption points.

In an embodiment, the filter head comprises a water outlet passage for receiving water that has passed through a filter connected in use to the filter connector, the water outlet passage dividing to provide at least a first water outlet sub-passage for passing filtered water received in the water outlet passage to the first water outlet and a second water outlet sub-passage for passing filtered water received in the water outlet passage to the second water outlet.

In an embodiment, the filter connector, the water inlet, the water inlet passage, the water outlet passage (where provided) and the at least first and second water outlets are all provided by a one-piece moulded filter head.

In an embodiment, the filter head is generally cylindrical in shape having first and second ends and at least one side wall, the filter connector being provided at the first end, the water inlet being provided in the or a side wall, the first water outlet being provided in the or a side wall, and the second water outlet being provided at the second end.

In an embodiment, the filter head comprises a pressure release valve which is operable to relieve pressure during maintenance and/or removable of the filter head from a water filter.

Further features and advantages of the invention will become apparent from the following description of preferred embodiments of the invention, given by way of example only, which is made with reference to the accompanying drawings.

### Brief Description of the Drawings

Figure 1 shows a schematic perspective view from one side and above of an example of a filter head;
Figure 2 shows a schematic perspective view from another side and above of the filter head of Figure 1;
Figure 3 shows a schematic view from above of the filter head of Figure 1;
Figure 4 shows a schematic cross-sectional view along the line A-A of Figure 3 of the filter head of Figure 1 and indicating a water flow which flows through a filter;
Figure 5 shows a schematic cross-sectional view from the front of the filter head fitted to a filter;
Figure 6 shows a schematic cross-sectional view from the side of the filter head fitted to a filter;
Figure 7 shows a schematic cross-sectional view corresponding to Figure 5 with water pipes fitted; and
Figure 8 shows a schematic perspective view corresponding to Figure 7.

### Detailed Description

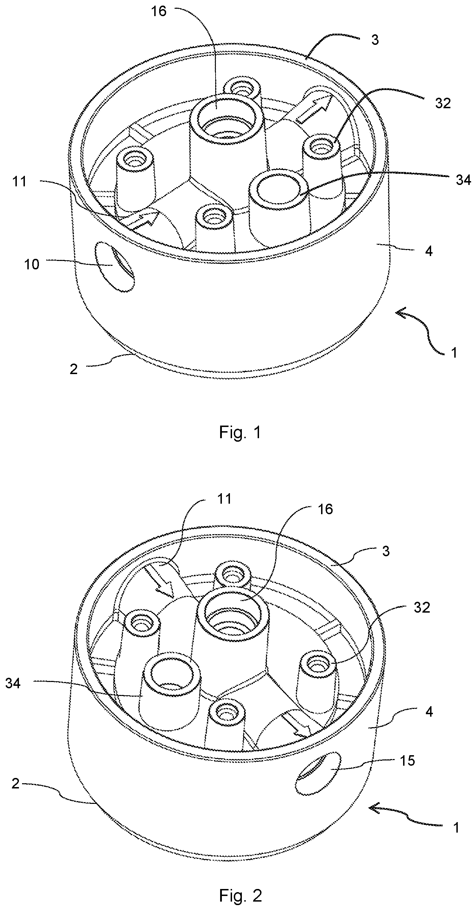

Referring first to Figures 1 to 3 of the drawings, an example of a filter head 1 for fitting to a water filter is shown. In this example, the filter head 1 is generally cylindrical, in this case of circular cross-sectional shape. The filter head 1 has a first end 2, a second end 3 and a side wall 4. The first end 2 provides a filter connector 5 suitable for fitting the filter head 1 to a water filter (discussed further below). In this example, the filter connector 5 is provided by the first end 2 having an internal screw thread 5 for screwing the filter head 1 onto a filter. Other arrangements for connecting the filter head 1 to a filter may be provided.

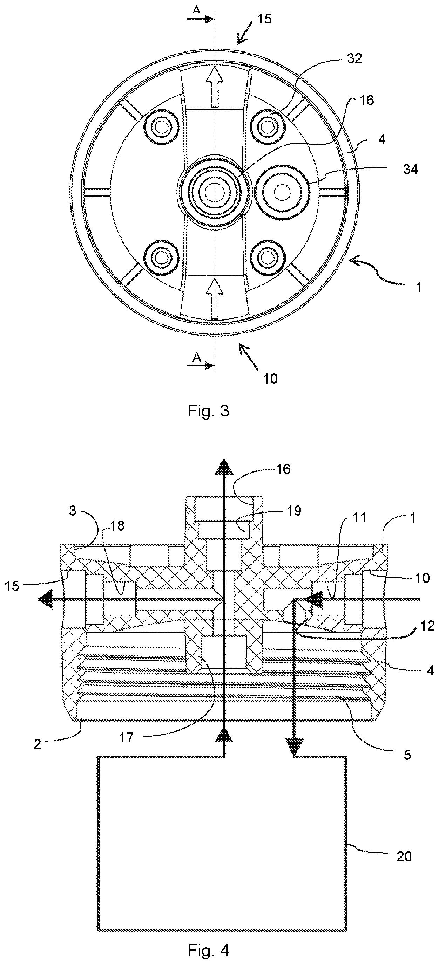

Referring additionally to Figure 4, which schematically shows the filter head 1 connected to a water filter 20, the filter head 1 has a water inlet 10 to allow water to enter the filter head from an external water supply (which may for example be a mains water supply or some other supply of, preferably, drinking water). The water inlet 10 is in fluid communication with an internal water inlet passage 11 for passing water entering the water inlet 10 to the water filter 20. In this example, and referring to the non-limiting orientation shown in Figure 4, the water inlet passage 11 passes initially horizontally from the water inlet 10 towards the centre of the filter head 1 and then drops down or has an exit aperture 12 towards the water filter 20. Water entering the filter head 1 via the water inlet 10 is therefore passed to the water filter 20 via the water inlet passage 11.

The filter head 1 additionally has at least two water outlets 15, 16 which allow filtered water received from the filter unit 20 to exit the filter head 1. At least water one water outlet passage 17 receives water that has passed through the filter 20 connected in use to the filter connector 5 to relay filtered water to the respective water outlets 15, 16. In the example shown, the filter head 1 has a single water outlet passage 17 that starts generally in the region of the filter connector 5 and passes into the body of the filter head 1. There, the water outlet passage 17 then effectively divides or is tapped to provide at least a first water outlet sub-passage 18, for passing filtered water received in the water outlet passage 17 to the first water outlet 15, and a second water outlet sub-passage 19, for passing filtered water received in the water outlet passage 17 to the second water outlet 16.

In this example, the water inlet 10 is provided in the side wall 4 of the filter head 1, the first water outlet 15 is provided in the side wall 4 of the filter head 1 (in this example, diametrically opposite the water inlet 10), and the second water outlet 16 is provided to open generally centrally of the second end 3 of the filter head 1. It will be appreciated that other arrangements and orientations are possible.

The filter head 1 with its various water inlets and outlets and internal water passages is preferably provided as a single item. The filter head 1 may be cast or moulded, and may for example be moulded plastics, including for example polycarbonate, ABS (acrylonitrile butadiene styrene), etc., or a metal for example.

The filter head 1 provides for a simple, convenient and inexpensive connection of a water supply to a filter and from the filter to a water tap and to a water appliance. Appliances that may be connected so as to receive filtered water include for example coffee and espresso machines, drinks vending machines, combi steamers and self-cooking systems, steam cookers, etc. More than two outlets may be provided in the filter head 1 so as to provide filtered water top more than water outputs or appliances. The filter head 1 avoids the need for the purchase and supply of additional fitting components such as a T-shape pipe fitting as in the prior art.

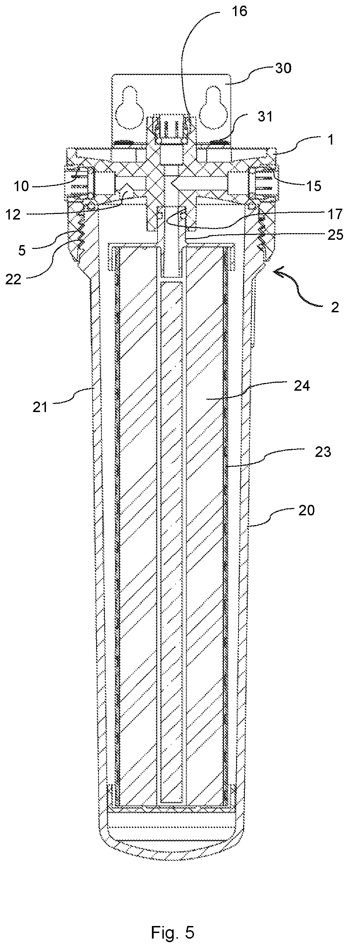

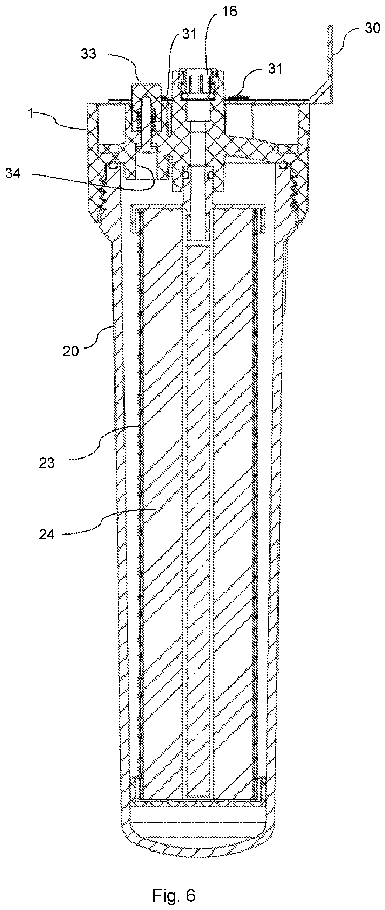

Figures 5 to 8 show an example of a filter head 1 fitted to a water filter. 20. The water filter 20 has an external casing 21 which has a screw thread 22 at its upper end to allow the water filter 20 to be screwed into the screw threaded filter connector 5 of the filter head 1 of this example. The exit aperture 12 of the filter head 1 opens into the interior of the casing 21 of the water filter 20. The filtering action of the water filter 20 is provided by an internal porous ceramic cylindrical wall 23 and internal filtering components 24 of the water filter 20 as known per se. Water entering the interior of the casing 21 of the water filter 20 passes through the ceramic cylindrical wall 23 and the internal filtering components 24 and then passes out of an exit aperture 25 of the water filter 20. The water outlet passage 17 of the filter head 1 is positioned so as to receive the exit aperture 25 (for example, by the exit aperture 25 being provided in a protruding nozzle of the water filter 20). The water outlet passage 17 of the filter head 1 therefore receives water that has passed through and has been filtered by the filter 20. Filtered water is then distributed by the filter head 1 to the water outlets 15, 16.

A mounting bracket 30 may be fixed to the upper portion of the filter head 1. This may be via screws 31 that pass through the bracket 30 into corresponding screw holes 32 provided facing the upper end 3 of the filter head 1. A pressure release valve 33 is mounted to the filter head 1, in this example by being located in a channel or port 34 that passes from one end 2 to the other end 3 of the filter head 1. The pressure release valve 33 is operable to relieve pressure during maintenance and/or removable of the filter head 1 from the water filter 20.

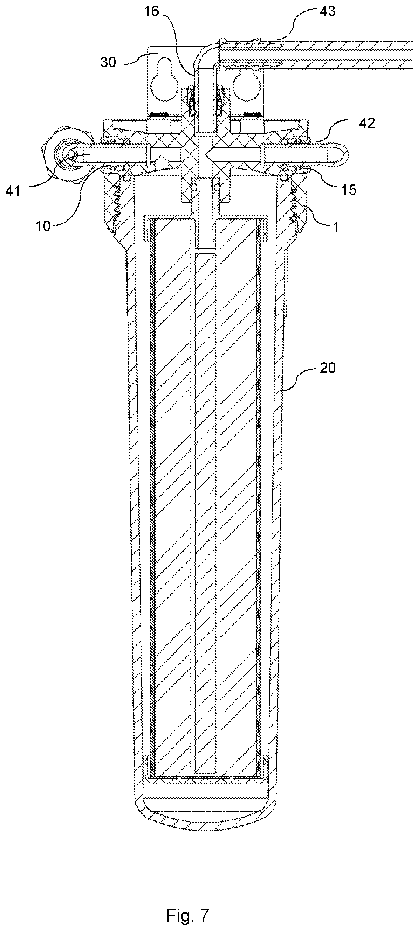

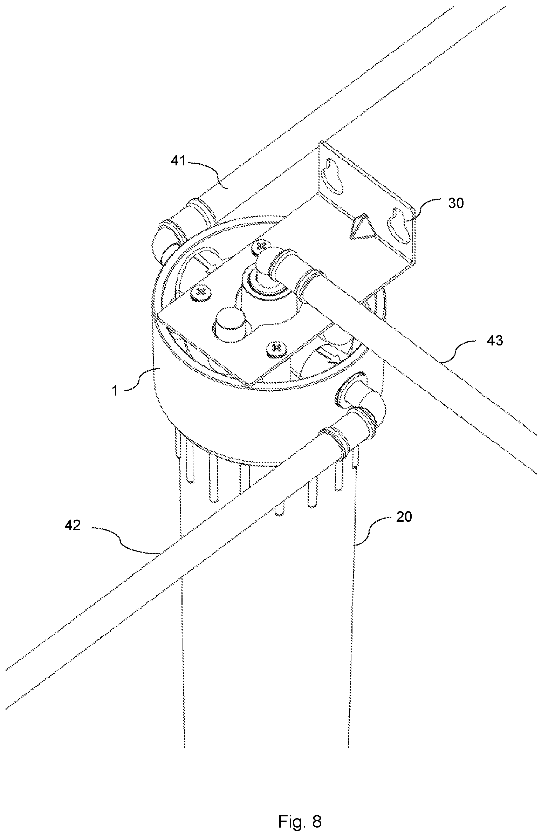

Figures 7 and 8 in particular show pipe work connected to the filter head 1. A first pipe 41 is fitted to the water inlet 10 of the filter head 1, to convey incoming water into the filter head 1. As mentioned, the incoming water may be for example mains drinking water. A second pipe 42 is fitted to the first water outlet 15 of the filter head 1, to convey filtered water received from the filter 20 to a water tap and a third pipe 43 is fitted to the second water outlet 16 of the filter head 1, to convey filtered water received from the filter 20 to a water appliance.

## Claims

1. A system comprising
a water tap;
a water appliance and
a filter head (1) for fitting to a water filter (20), the filter head (1) comprising:
a filter connector (5) for enabling the filter head (1) to be connected to a filter (20);
a water inlet (10) to allow water to enter the filter head (1) from an external water supply;
a water inlet passage (11) for passing water entering the water inlet (10) to a filter (20) connected in use to the filter connector (5);
a first water outlet (15) to allow water that has passed through a filter (20) connected in use to the filter connector (5) to exit the filter head (1) through the first water outlet (15),
a first outlet pipe (42) which is fitted to the first water outlet (15) to convey water that has passed through the filter (20) out of the filter head (1) to the water tap;
a second water outlet (16) to allow water that has passed through a filter (20) connected in use to the filter connector (5) to exit the filter head (1) through the second water outlet (16); and
a second outlet pipe (43) which is fitted to the second water outlet (16) to convey water that has passed through the filter (20) out of the filter head (1) to said water appliance.

2. A system according to claim 1, wherein the filter head comprises a water outlet passage (17) for receiving water that has passed through a filter (20) connected in use to the filter connector (5), the water outlet passage (17) dividing to provide at least a first water outlet sub-passage (18) for passing filtered water received in the water outlet passage (17) to the first water outlet (15) and a second water outlet sub-passage (19) for passing filtered water received in the water outlet passage (17) to the second water outlet (16).

3. A system according to claim 2, wherein the filter connector (5), the water inlet (10), the water inlet passage (11), the water outlet passage (17) and the at least first and second water outlets (15, 16) are all provided by a one-piece moulded filter head.

4. A system according to any of claims 1 to 3, wherein the filter head (1) is generally cylindrical in shape having first and second ends and at least one side wall (23), the filter connector (5) being provided at the first end, the water inlet (10) being provided in the or a side wall, the first water outlet (15) being provided in the or a side wall, and the second water outlet (16) being provided at the second end.

5. A system according to any of claims 1 to 4, wherein the filter head comprises a pressure release valve (33) which is operable to relieve pressure during maintenance and/or removable of the filter head (1) from a water filter (20).

## Patentansprüche

1. System, umfassend:
einen Wasserhahn;
ein Wassergerät und
einen Filterkopf (1) zum Anbringen an einem Wasserfilter (20), wobei der Filterkopf (1) Folgendes umfasst:
einen Filterverbinder (5) zum Ermöglichen einer Verbindung des Filterkopfs (1) mit einem Filter (20);
einen Wassereinlass (10) zum Gestatten eines Wassereintritts in den Filterkopf (1) von einer externen Wasserversorgung;
einen Wassereinlassdurchgang (11) zum Leiten von in den Wassereinlass (10) eintretendem Wasser zu einem im Gebrauch mit dem Filterverbinder (5) verbundenen Filter (20);
einen ersten Wasserauslass (15) zum Gestatten des Austretens von Wasser, das durch einen im Gebrauch mit dem Filterverbinder (5) verbundenen Filter (20) passiert ist, durch den ersten Wasserauslass (15) aus dem Filterkopf (1),
ein erstes Auslassrohr (42), das an dem ersten Wasserauslass (15) angebracht ist, um Wasser, das durch den Filter (20) passiert ist, aus dem Filterkopf (1) zu dem Wasserhahn zu leiten;
einen zweiten Wasserauslass (16) zum Gestatten des Austretens von Wasser, das durch einen im Gebrauch mit dem Filterverbinder (5) verbundenen Filter (20) passiert ist, durch den zweiten Wasserauslass (16) aus dem Filterkopf (1); und
ein zweites Auslassrohr (43), das an dem zweiten Wasserauslass (16) angebracht ist, um Wasser, das durch den Filter (20) passiert ist, aus dem Filterkopf (1) zu dem Wassergerät zu leiten.

2. System nach Anspruch 1, wobei der Filterkopf einen Wasserauslassdurchgang (17) zum Empfangen von Wasser, das durch einen im Gebrauch mit dem Filterverbinder (5) verbundenen Filter (20) passiert ist, umfasst, wobei sich der Wasserauslassdurchgang (17) teilt, um mindestens einen ersten Wasserauslassnebendurchgang (18) zum Leiten von in dem Wasserauslassdurchgang (17) empfangenem gefilterten Wasser zu dem ersten Wasserauslass (15) und einen zweiten Wasserauslassnebendurchgang (19) zum Leiten von in dem Wasserauslassdurchgang (17) empfangenem gefilterten Wasser zu dem zweiten Wasserauslass (16) bereitzustellen.

3. System nach Anspruch 2, wobei der Filterverbinder (5), der Wassereinlass (10), der Wassereinlassdurchgang (11), der Wasserauslassdurchgang (17) und der mindestens erste und zweite Wasserauslass (15, 16) alle durch einen einstückigen geformten Filterkopf bereitgestellt sind.

4. System nach einem der Ansprüche 1 bis 3, wobei der Filterkopf (1) eine allgemein zylindrische Form mit einem ersten und einem zweiten Ende und mindestens einer Seitenwand (23) aufweist, wobei der Filterverbinder (5) an dem ersten Ende vorgesehen ist, wobei der Wassereinlass (10) in der oder einer Seitenwand vorgesehen ist, wobei der erste Wasserauslass (15) in der oder einer Seitenwand vorgesehen ist und der zweite Wasserauslass (16) an dem zweiten Ende vorgesehen ist.

5. System nach einem der Ansprüche 1 bis 4, wobei der Filterkopf ein Druckablassventil (33) umfasst, das dahingehend betreibbar ist, während der Wartung und/oder Entfernung des Filterkopfs (1) von einem Wasserfilter (20) Druck abzulassen.

## Revendications

1. Système comprenant
un robinet d'eau ;
un appareil à eau et
une tête de filtre (1) destinée à s'ajuster à un filtre à eau (20), la tête de filtre (1) comprenant :
un connecteur de filtre (5) prévu pour permettre de connecter la tête de filtre (1) à un filtre (20) ;
une entrée d'eau (10) pour permettre à l'eau de pénétrer dans la tête de filtre (1) depuis une alimentation en eau extérieure ;
un passage d'entrée d'eau (11) pour permettre le passage de l'eau pénétrant dans l'entrée d'eau (10) jusqu'à un filtre (20) connecté pendant l'utilisation au connecteur de filtre (5) ;
une première sortie d'eau (15) pour permettre à l'eau étant passée à travers un filtre (20) connecté pendant l'utilisation au connecteur de filtre (5) de sortir de la tête de filtre (1) à travers la première sortie d'eau (15),
un premier tuyau de sortie (42) qui est ajusté sur la première sortie d'eau (15) pour transporter l'eau qui est passée à travers le filtre (20) hors de la tête de filtre (1) jusqu'au robinet d'eau ;
une deuxième sortie d'eau (16) prévue pour permettre à l'eau qui est passée à travers un filtre (20) connecté pendant l'utilisation au connecteur de filtre (5) de sortir de la tête de filtre (1) à travers la deuxième sortie d'eau (16) ; et
un deuxième tuyau de sortie (43) qui est ajusté sur la deuxième sortie d'eau (16) pour transporter l'eau qui est passée à travers le filtre (20) hors de la tête de filtre (1) jusqu'audit appareil à eau.

2. Système selon la revendication 1, dans lequel la tête de filtre comprend un passage de sortie d'eau (17) prévu pour recevoir l'eau qui est passée à travers un filtre (20) connecté pendant l'utilisation au connecteur de filtre (5), le passage de sortie d'eau (17) se divisant pour fournir au moins un premier sous-passage de sortie d'eau (18) pour faire passer l'eau filtrée reçue dans le passage de sortie d'eau (17) jusqu'à la première sortie d'eau (15) et un deuxième sous-passage de sortie d'eau (19) pour faire passer l'eau filtrée reçue dans le passage de sortie d'eau (17) jusqu'à la deuxième sortie d'eau (16).

3. Système selon la revendication 2, dans lequel le connecteur de filtre (5), l'entrée d'eau (10), le passage d'entrée d'eau (11), le passage de sortie d'eau (17) et les au moins première et deuxième sorties d'eau (15, 16) sont tous réalisés au moyen d'une tête de filtre moulée d'une seule pièce.

4. Système selon l'une quelconque des revendications 1 à 3, dans lequel la tête de filtre (1) présente une forme généralement cylindrique ayant des première et deuxième extrémités et au moins une paroi latérale (23), le connecteur de filtre (5) étant prévu au niveau de la première extrémité, l'entrée d'eau (10) étant prévue dans la ou une paroi latérale, la première sortie d'eau (15) étant prévue dans la ou une paroi latérale, et la deuxième sortie d'eau (16) étant prévue au niveau de la deuxième extrémité.

5. Système selon l'une quelconque des revendications 1 à 4, dans lequel la tête de filtre comprend une valve de détente de pression (33) qui peut être actionnée pour relâcher la pression au cours de la maintenance et/ou pour enlever la tête de filtre (1) d'un filtre à eau (20).
